# NEW EUROPEAN PATENT SPECIFICATION

(11) **EP 2 085 589 B2**
(45) Date of publication and mention of the opposition decision: **12.02.2020**
(45) Mention of the grant of the patent: 23.03.2016
(21) Application number: 09250170.9
(22) Date of filing: 22.01.2009
(51) Int. Cl.: F02C 7/36, F02C 7/32

(54) **Accessory assembly and the corresponding gearbox and gas turbine engine**
Anordnung von Hilfsaggregaten, entsprechende Getriebevorrichtung und Gasturbinentriebwerk
Ensemble accessoires, boîte de vitesse et moteur à turbine à gaz correspondants

(30) Priority: 25.01.2008 US 19742
(43) Date of publication of application: 05.08.2009
(73) Proprietor: United Technologies Corporation, Farmington, CT 06032 (US)
(72) Inventor: Merry, Brian D., Andover, CT 06232 (US); Dye, Christopher M., S. Windsor, CT 06074 (US); Suciu, Gabriel L., Glastonbury, CT 06033 (US); McCune, Michael E., Colchester, CT 06415 (US)
(74) Representative: Dehns

(56) References cited:
- EP-A1- 1 541 834
- EP-A1- 1 691 056
- EP-A1- 1 777 392
- EP-A1- 1 798 399
- EP-A1- 1 876 337
- EP-A2- 0 798 454
- EP-A2- 1 908 941
- EP-A2- 1 931 018
- EP-A2- 1 939 429
- WO-A1-95/02120
- GB-A- 626 036
- GB-A- 839 961
- GB-A- 2 440 747
- GB-A- 2 450 778
- US-A- 4 068 470
- US-A1- 2006 101 804
- US-A1- 2006 248 900
- US-A1- 2007 151 258
- US-A1- 2008 006 018

## Description

### BACKGROUND

### Technical Field

The disclosure generally relates to gas turbine engines.

### Description of the Related Art

Gas turbine engines typically use accessory gearboxes for powering auxiliary components, such as generators and oil pumps, for example. Conventionally, such an accessory gearbox is driven by a tower shaft, which is coupled to the shaft that interconnects the high pressure compressor and the high pressure turbine of the engine.

A prior art engine, having the features of the preamble of claim 1, is disclosed in WO-95/02120. Other prior art engines are disclosed in EP-1798399 and US-2007/151258.

### SUMMARY

According to the present invention, there is provided a gas turbine engine as claimed in claim 1.

Other systems, methods, features and/or advantages of this disclosure will be or may become apparent to one with skill in the art upon examination of the following drawings and detailed description. It is intended that all such additional systems, methods, features and/or advantages be included within this description and be within the scope of the present disclosure.

### BRIEF DESCRIPTION OF THE DRAWINGS

Many aspects of the disclosure can be better understood with reference to the following drawings. The components in the drawings are not necessarily to scale. Moreover, in the drawings, like reference numerals designate corresponding parts throughout the several views.
FIG. 1 is a schematic diagram depicting an exemplary embodiment of a gas turbine engine.
FIG. 2 schematic diagram depicting a a portion of the engine of FIG. 1, showing detail of the accessory gearbox.

### DETAILED DESCRIPTION

Accessory gearboxes and related gas turbine engine systems are provided, several exemplary embodiments of which will be described in detail. In some embodiments, an accessory gearbox is integrated with a portion of an engine casing, such as by sharing a wall. By way of example, one side of the wall can be used to define a gas flow path through the engine, while an opposing side of the wall can be used to at least partially house components of the gearbox. Additionally or alternatively, in some embodiments, multiple tower shafts can be used to power the components of the gearbox.

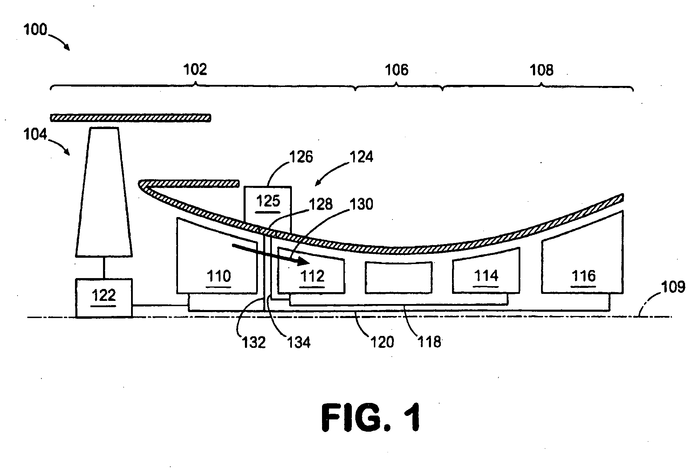

In this regard, reference is made to the schematic diagram of FIG. 1, which depicts an exemplary embodiment of a gas turbine engine. As shown in FIG. 1, engine 100 is a turbofan gas turbine engine that incorporates a compressor section 102 (which includes a fan 104), a combustion section 106 and a turbine section 108 that are located along a longitudinal axis 109. Although depicted as a turbofan gas turbine engine, it should be understood that the concepts described herein are not limited to use with turbofans as the teachings may be applied to other types of gas turbine engines.

Compressor section 102 includes a low pressure compressor 110 and a high pressure compressor 112. The turbine section 108 includes a high pressure turbine 114 and a low pressure turbine 116. In operation, the high pressure turbine 114 drives the high pressure compressor 112 via a high spool (shaft) 118, and low pressure turbine 114 drives the low pressure compressor 110 via a low spool (shaft) 120. Notably, a gearbox 122 (e.g., a differential gear assembly) also is driven by the low spool for rotating the fan 104.

As shown in FIG. 1, engine 100 additionally includes an accessory assembly 124. Accessory assembly 124 incorporates an accessory gearbox 125 that includes a housing 126, which is used to contain internal components of the gearbox. Notably, a wall 128, which forms a portion of a gas flow path through the engine (a portion of which is depicted by arrow 130) is integrated with the housing to contain the internal components. This integration tends to reduce weight of the engine.

In this embodiment, wall 128 is an outer wall of a transition duct that extends between the low pressure compressor 110 and the high pressure compressor 112. Positioning of the accessory gearbox in such a forward, cooler location in the engine compartment may tend to improve gearbox component life.

Gearbox 125 is used to provide rotational energy extracted by the turbine section 108 to various accessories associated with the gearbox. For instance, such accessories can include oil pumps and electrical generators. In order to transmit the rotational energy from the turbine section to gearbox 125, tower shafts of the accessory assembly are used. Specifically, a tower shaft 132 is coupled between low spool 120 and gearbox 125, and a tower shaft 134 is coupled between high spool 118 and gearbox 125.

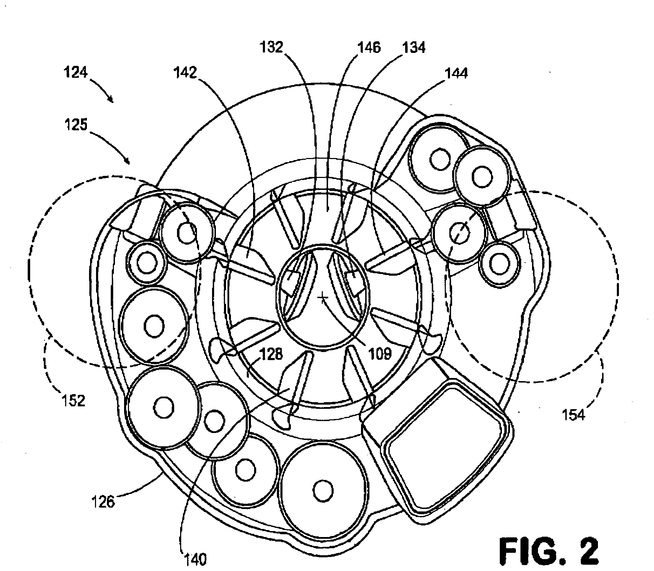

As shown in greater detail in FIG. 2, tower shafts 132 and 134 extend radially outwardly from longitudinal axis 109, with each tower shaft being located at a different circumferential position about the longitudinal axis. In this embodiment, tower shaft 132 is generally located at the 10 o'clock position and tower shaft 134 is generally located at the 2 o'clock position as viewed from the rear of the engine. Notably, in other embodiments, various other numbers and positions of tower shafts can be used.

Also shown in FIG. 2 are fairings (e.g., fairings 140, 142 and 144) that extend radially across the gas flow path between wall 128 and inner transition duct wall 146.

Cavities (not shown) located within fairings 142 and 144 permit passage of the tower shafts through the fairings. Specifically, tower shaft 132 extends through fairing 142, and tower shaft 134 extends through fairing 144. Notably, the use of multiple tower shafts enables shafts of smaller diameter to be used for transmitting rotational energy to the accessory gearbox. As such, the multiple tower shafts negatively impact airflow through the portion of the engine through which the tower shafts pass to a lesser extent than does a single, wider tower shaft. In this embodiment, support struts (not shown) extend through the remaining fairings, e.g., fairing 140.

Use of multiple tower shafts also enables at least one of the tower shafts (such as in the embodiment of FIGS. 1 and 2) to be driven by other than the high spool (e.g., by the low spool in a two spool engine). As such, energy extraction from the high spool can be reduced. Notably, coupling of at least one tower shaft to a high spool typically is required for engine start, particularly in those embodiments that incorporate starter/generators driven by the accessory gearbox.

In the embodiment of FIGS. 1 and 2, each of the tower shafts independently powers a separate starter/generator. Specifically, tower shaft 132 powers starter/generator 152, and tower shaft 134 powers starter/generator 154.

It should be emphasized that the above-described embodiments are merely possible examples of implementations set forth for a clear understanding of the principles of this disclosure. Many variations and modifications may be made to the above-described embodiments without departing substantially from the spirit and principles of the disclosure. All such modifications and variations are intended to be included herein within the scope of this disclosure and protected by the accompanying claims.

## Claims

1. A gas turbine engine (100) comprising:
an accessory gearbox (125) operative to be driven by rotational energy extracted from the engine (100);
a first tower shaft (132) operative to drive at least a portion of the accessory gearbox (125) with rotational energy extracted from the engine (100); and
a second tower shaft (134) operative to drive at least a portion of the accessory gearbox (125) with rotational energy extracted from the engine (100), wherein the first tower shaft (132) and the second tower shaft (134) extend radially outwardly from a longitudinal axis (109) of the engine at different circumferential locations;
**characterised in that** said engine further comprises:
a first starter/generator (152) operative to be independently driven by said first tower shaft (132); and
a second starter/generator (154) operative to be independently driven by said second tower shaft (134).

2. The engine (100) of claim 1, further comprising a turbine section (108), wherein said first and second tower shafts (132,134) are operative to extract rotational energy from the turbine section (108).

3. The engine (100) of claim 1 or 2, further comprising an annular gas flow path and fairings (142,144) extending across the gas flow path, wherein said first and second tower shafts (132,134) extend across the annular gas flow path through an interior of a corresponding one of the fairings (142,144).

4. The engine (100) of claim 3, further comprising a low pressure compressor (110) and a high pressure compressor (112), wherein the annular gas flow path is located between the low pressure compressor (110) and the high pressure compressor (112).

5. The engine (100) of any preceding claim further comprising a wall (128) defining at least a portion of the annular gas flow path, wherein the accessory gearbox (125) comprises a housing (126) and the housing (126) and the wall (128) are attached to form an enclosure.

6. The engine (100) of any preceding claim further comprising a first spool (118) and a second spool (120), wherein said first tower shaft (132) is driven by the first spool (118) and said second tower shaft (134) is driven by the second spool (120).

7. The engine (100) of any preceding claim, wherein said first tower shaft (134) is driven by a high spool (120) of the engine (100) and said second tower shaft (132) is driven by a spool (118) other than the high spool (120) of the engine (100).

8. The engine of any preceding claim, wherein the engine is a turbofan gas turbine engine having a fan (104).

9. The engine of claim 8, wherein the engine (100) further comprises a differential gear assembly (122) and the fan (104) is operative to be driven by the differential gear assembly (122).

## Patentansprüche

1. Gasturbinentriebwerk (100), umfassend:
eine Getriebevorrichtung (125), die betriebsfähig ist, um von einer Rotationsenergie angetrieben zu werden, die aus dem Triebwerk (100) entnommen wird;
eine erste Turmwelle (132), die betriebsfähig ist, um wenigstens einen Teil der Getriebevorrichtung (125) mit Rotationsenergie anzutreiben, die aus dem Triebwerk (100) entnommen wird; und
eine zweite Turmwelle (134), die betriebsfähig ist, um wenigstens einen Teil der Getriebevorrichtung (125) mit Rotationsenergie anzutreiben, die aus dem Triebwerk (100) entnommen wird, wobei die erste Turmwelle (132) und die zweite Turmwelle (134) sich von einer Längsachse (109) des Triebwerks an unterschiedlichen Umfangspositionen radial nach außen erstrecken;
**dadurch gekennzeichnet, dass** das Triebwerk ferner Folgendes umfasst:
einen ersten Starter/Generator (152), der betriebsfähig ist, um von der ersten Turmwelle (132) unabhängig angetrieben zu werden; und
einen zweiten Starter/Generator (154), der betriebsfähig ist, um von der zweiten Turmwelle (134) unabhängig angetrieben zu werden.

2. Triebwerk (100) nach Anspruch 1, ferner umfassend einen Turbinenabschnitt (108), wobei die erste und zweite Turmwelle (132, 134) betriebsfähig sind, um Rotationsenergie aus dem Turbinenabschnitt (108) zu entnehmen.

3. Triebwerk (100) nach Anspruch 1 oder 2, ferner umfassend einen ringförmigen Gasströmungsweg und Verkleidungen (142, 144), die sich über den Gasströmungsweg erstrecken, wobei die erste und zweite Turmwelle (132, 134) sich durch ein Inneres einer entsprechenden einen der Verkleidungen (142, 144) über den ringförmigen Gasströmungsweg erstrecken.

4. Triebwerk (100) nach Anspruch 3, ferner umfassend einen Niederdruckkompressor (110) und einen Hochdruckkompressor (112), wobei der ringförmige Gasströmungsweg zwischen dem Niederdruckkompressor (110) und dem Hochdruckkompressor (112) angeordnet ist.

5. Triebwerk (100) nach einem der vorangehenden Ansprüche, ferner umfassend eine Wand (128), die wenigstens einen Teil des ringförmigen Gasströmungswegs definiert, wobei die Getriebevorrichtung (125) ein Gehäuse (126) umfasst und das Gehäuse (126) und die Wand (128) angebracht sind, um eine Einfassung zu bilden.

6. Triebwerk (100) nach einem der vorangehenden Ansprüche, ferner umfassend eine erste Spule (118) und eine zweite Spule (120), wobei die erste Turmwelle (132) von der ersten Spule (118) angetrieben wird und die zweite Turmwelle (134) von der zweiten Spule (120) angetrieben wird.

7. Triebwerk (100) nach einem der vorangehenden Ansprüche, wobei die erste Turmwelle (134) von einer hohen Spule (120) des Triebwerks (100) angetrieben wird und die zweite Turmwelle (132) von einer anderen Spule (118) als die hohe Spule (120) des Triebwerks (100) angetrieben wird.

8. Triebwerk nach einem der vorangehenden Ansprüche, wobei das Triebwerk ein Turbofan-Gasturbinentriebwerk mit einem Gebläse (104) ist.

9. Triebwerk nach Anspruch 8, wobei das Triebwerk (100) ferner eine Differenzialgetriebebaugruppe (122) umfasst und das Gebläse (104) betriebsfähig ist, um durch die Differenzialgetriebebaugruppe (122) angetrieben zu werden.

## Revendications

1. Moteur à turbine à gaz (100) comprenant :
une boîte de vitesses accessoire (125) opérationnelle pour être entraînée par de l'énergie rotative extraite du moteur (100) ;
un premier arbre de tour (132) opérationnel pour entraîner au moins une partie de la boîte de vitesses accessoire (125) avec de l'énergie rotative extraite du moteur (100) ; et
un second arbre de tour (134) opérationnel pour entraîner au moins une partie de la boîte de vitesses accessoire (125) avec de l'énergie rotative extraite du moteur (100), dans lequel le premier arbre de tour (132) et le second arbre de tour (134) s'étendent radialement vers l'extérieur d'un axe longitudinal (109) du moteur à différents endroits circonférentiels ;
**caractérisé en ce que** ledit moteur comprend en outre :
un premier démarreur/alternateur(152) fonctionnant pour être entraîné indépendamment par ledit premier arbre tour (132); et
un deuxième démarreur/alternateur (154) fonctionnant pour être entraîné indépendamment par ledit deuxième arbre tour (134).

2. Moteur (100) selon la revendication 1, comprenant en outre une section de turbine (108), dans lequel lesdits premier et second arbres de tour (132, 134) sont opérationnels pour extraire de l'énergie rotative de la section de turbine (108).

3. Moteur (100) selon la revendication 1 ou 2, comprenant en outre une voie de flux de gaz annulaire et des carénages (142, 144) s'étendant sur la voie de flux de gaz, dans lequel lesdits premier et second arbres de tour (132, 134) s'étendent sur la voie de flux de gaz annulaire par un intérieur d'un carénage correspondant des carénages (142, 144).

4. Moteur (100) selon la revendication 3, comprenant en outre un compresseur basse pression (110) et un compresseur haute pression (112), dans lequel la voie de flux de gaz annulaire est située entre le compresseur basse pression (110) et le compresseur haute pression (112).

5. Moteur (100) selon l'une quelconque des revendications précédentes, comprenant en outre une paroi (128) définissant au moins une partie de la voie de flux de gaz annulaire, dans lequel la boîte de vitesses accessoire (125) comprend un boîtier (126) et le boîtier (126) et la paroi (128) sont attachés pour former une enceinte.

6. Moteur (100) selon l'une quelconque des revendications précédentes, comprenant en outre une première bobine (118) et une seconde bobine (120), dans lequel ledit premier arbre de tour (132) est entraîné par la première bobine (118) et ledit second arbre de tour (134) est entraîné par la seconde bobine (120).

7. Moteur (100) selon l'une quelconque des revendications précédentes, dans lequel ledit premier arbre de tour (134) est entraîné par une haute bobine (120) du moteur (100) et ledit second arbre de tour (132) est entraîné par une bobine (118) autre que la haute bobine (120) du moteur (100).

8. Moteur selon l'une quelconque des revendications précédentes, dans lequel le moteur est un moteur à turbine à gaz à turboventilateur présentant un ventilateur (104).

9. Moteur selon la revendication 8, dans lequel le moteur (100) comprend en outre un ensemble d'engrenage différentiel (122) et le ventilateur (104) est opérationnel pour être entraîné par l'ensemble d'engrenage différentiel (122).
